# EUROPÄISCHE PATENTSCHRIFT

(11) **EP 3 221 101 B1**
(45) Veröffentlichungstag und Bekanntmachung des Hinweises auf die Patenterteilung: **14.10.2020**
(21) Anmeldenummer: 15794853.0
(22) Anmeldetag: 03.11.2015
(51) Int. Cl.: B26D 7/08, B26D 1/46, B29C 44/56, B29C 44/34, B29D 7/01, B29D 7/00, B26D 11/00, B26D 3/00, B26D 7/10, B26D 1/50, B26D 1/54, B29K 23/00, B29K 27/06, B29K 33/00, B29K 105/04

(54) **SPALTEN VON DICKEN HARTSCHAUM-PLATTEN**
SPLITTING OF THICK HARD FOAM PANELS
SÉPARATION DE PLAQUES ÉPAISSES EN MOUSSE RIGIDE

(30) Priorität: 18.11.2014 EP 14193576
(43) Veröffentlichungstag der Anmeldung: 27.09.2017
(73) Patentinhaber: Evonik Operations GmbH, 45128 Essen (DE)
(72) Erfinder: RICHTER, Thomas, 64293 Darmstadt (DE); BERNHARD, Kay, 64291 Darmstadt (DE); BECKER, Florian, 64289 Darmstadt (DE); GOLDMANN, Felix, 64347 Griesheim (DE); DENK, Tim, 63868 Grosswallstadt (DE); SCHMIDT, Ulrich, 65439 Flörsheim am Main (DE); HEMPLER, Mathias, 63579 Freigericht (DE)
(74) Vertreter: Evonik Patent Association
(86) Internationale Anmeldenummer: PCT/EP2015/075520
(87) Internationale Veröffentlichungsnummer: WO 2016/078902

(56) Entgegenhaltungen:
- EP-A1- 0 873 827
- EP-A1- 1 444 293
- DE-A1- 2 926 564
- DE-A1- 19 919 181
- DE-A1-102011 084 987
- DE-A1-102013 205 963
- US-A1- 2006 157 886
- US-A1- 2011 048 187
- US-B1- 6 209 430

## Beschreibung

### Gebiet der Erfindung

Die vorliegende Erfindung betrifft ein Verfahren zum Schneiden von Hartschaumstoffen, insbesondere von P(M)I-Schaumblöcken. Hierbei wird ein Verfahren zur Verfügung gestellt, durch welches diese Hartschaumstoffe ohne Materialverlust, welcher beispielsweise beim Sägen durch den gebildeten Sägestaub in relevanten Mengen erzeugt wird, auch in höheren Schichtdicken von beispielsweise mehr als 3 mm geschnitten werden kann.

### Stand der Technik

Hartschaumstoffe, wie z.B. Polymethacrylimid, welches unter dem Produktnamen Rohacell® vertrieben wird, wie auch andere Schaumstoffe können durch unterschiedliche Verfahren geschnitten werden. Standardmäßig geschieht dies im Falle von Rohacell® durch Sägen. Hierbei werden dicke Schaumblöcke durch Bandsägen horizontal aufgetrennt, wobei Sägestaub in relevant hohen Mengen anfällt. Darüber hinaus ist es mit diesem Verfahren kaum möglich, dünne oder sehr dünne Platten bzw. Folien aus dem Hartschaumstoff zu erhalten. Sehr dünne Folien sind schon allein durch die Dicke der Sägeblätter und die relativ hohe mechanische Belastung des abzutrennenden Bereichs des Hartschaumstoffs beim Sägen nicht realisierbar. Dünne Platten mit einer Dicke zwischen 3 und 10 mm sind wiederum nur unter großem Materialverlust und unter relevanter Staubbildung möglich, da ein beim Sägen verwendetes Sägeblatt eine relevante Dicke von mindestens 2 mm aufweist, die zu entsprechendem Materialverlust führen. Wenn das Sägeblatt wiederum besonders dünn gewählt wird, hängt dieses durch und führt zu hohen Dickevarianzen im Schneidgut, bzw. macht das Abtrennen von Folien nahezu unmöglich. Wenn dickere Platten mit einer Stärke von mehr als 10 mm getrennt werden sollen bilden sich gleichfalls Probleme beim Sägen, da das durch die Dicke des Sägeblatts begründete Verbiegen des abzutrennenden Bereichs während der Trennung zu einem Bruch des selbigen führen würde. Dies ist ein Problem, welches insbesondere bei sehr harten und damit in gewissem Maße spröden Schaumstoffen auftritt. Die Offenlegungsschrift DE 10 2013 205 963 A1 beschreibt ein Verfahren zur kontinuierlichen Fertigung von PMI-Schaumblöcken.

Weichschäume, z.B. Polyurethan-Weichschäume können auch durch den Einsatz von Bandmesser geschnitten werden, wobei kein Sägestaub als Abfallprodukt anfällt.

Viele Schäume (Hart- und Weichschaumstoffe) können weiterhin durch erhitzte, gespannte Drähte geschnitten werden. Hierbei besteht jedoch die Möglichkeit einer thermischen Schädigung des Materials durch den heißen Draht. Weiterhin besteht, bedingt durch die endliche Dicke des Drahtes, auch hier das Problem des Materialverlustes oder des Bruches dünner Platten.

### Aufgabe

Vor dem Hintergrund des diskutierten Standes der Technik war es daher Aufgabe der vorliegenden Erfindung, ein Verfahren zum Trennen von Hartschaumstoffen in zwei flächige Teile zur Verfügung zu stellen, bei dem der Materialverlust in Form von Staub möglichst gering gehalten wird und gleichzeitig das Material, insbesondere an der Trennstelle nicht thermisch belastet oder anderweitig übermäßig geschädigt wird.

Insbesondere soll das Verfahren dazu geeignet sein, sowohl Folien aus diesem Hartschaum mit einer Dicke kleiner 3 mm als auch dünne Platten mit einem Durchmesser zwischen 3 und 30 mm wie verlangt herstellen zu können.

Darüber hinaus bestand dabei die Aufgabe, dass dieses Verfahren zur derartigen Verarbeitung von Poly(meth)acrylimid (P(M)I), insbesondere von Polymethacrylimid (PMI) geeignet sein soll.

Weitere, an dieser Stelle nicht explizit diskutierte Aufgaben, können sich aus dem Stand der Technik, der Beschreibung, den Ansprüchen oder den Ausführungsbeispielen ergeben.

### Lösung

Im Weiteren werden unter der Formulierung Poly(meth)acrylimid (P(M)I) Polymethacrylimide (PMI), Polyacrylimide (PI) oder Mischungen daraus verstanden. Entsprechendes gilt für die entsprechenden Monomere wie (Meth)acrylimid bzw. (Meth)acrylsäure. So werden beispielsweise unter dem Begriff (Meth)acrylsäure sowohl Methacrylsäure als auch Acrylsäure sowie Mischungen aus diesen beiden verstanden.

Gelöst wurden die Aufgaben mittels eines neuartigen Verfahrens zur flächigen Trennung von Hartschäumen, welches zur Gewinnung von Folien oder dünnen Platten geeignet ist. Dieses neuartige Verfahren ist dadurch gekennzeichnet, dass der Hartschaum erst flexibilisiert und anschließend mit einem Messer geschnitten wird. Dabei wird der Hartschaum in einer ersten alternativen Ausführungsform der Erfindung zur Flexibilisierung vor dem Schneiden in Wasser gelagert. In einer zweiten Ausführungsform wird der Hartschaum auf eine Temperatur erhitzt bzw. eingestellt, die minimal 15 °C und maximal 1 °C unterhalb der Schäumungstemperatur des Hartschaumstoffs liegt. Einstellen der Temperatur bedeutet dabei, dass der noch heiße Schaum direkt nach dem Schäumvorgang unter Abkühlen auf das aufgezeigte Temperaturfenster geschnitten wird.

Weiterhin können diese beiden Alternativen auch miteinander kombiniert werden, indem das Wasser, optional unter Druck, entsprechend erwärmt ist, ein Vorgeheizter Hartschaum in ein erwärmtes Wasser gegeben wird oder der Hartschaum nach dem Entnahme aus dem Wasser und vor dem Schneiden zusätzlich erhitzt wird.

Unter der Schäumungstemperatur wird dabei erfindungsgemäß die Temperatur verstanden, ab der bei der vorher durchgeführten Schäumung des Polymers die Schäumung einsetzt. Diese Temperatur hängt primär von dem verwendeten Treibmittel ab und ist für den Fachmann einfach einzustellen bzw. zu bestimmen. Bei dem Schneiden spielt die Schäumungstemperatur eine Rolle, da es hier zu einem Nachschäumen kommen kann, welches den Schneidvorgang stören würde bzw. unmöglich machen würde.

In der Ausführungsform des Erhitzens wird der Hartschaumstoff bevorzugt vor dem Schneiden durch Lagerung in einem Ofen oder durch Bestrahlung mit IR-Strahlen oder Mikrowellen flexibilisiert. Dazu gibt es zusätzlich zur Auswahl der Heizquelle mehrere Varianten. In einer ersten Variante wird der Hartschaumstoff direkt nach der Entnahme aus einem Ofen oder einer Heizpresse mit dem Messer geschnitten. In einer zweiten Variante befindet sich das Messer in dem Ofen. Diese Variante ist besonders effizient durchführbar, jedoch dabei apparativ sehr anspruchsvoll. Hierbei muss nicht der gesamte zu schneidende Schaumblock durchgewärmt werden. Es genügt, eine Schicht durchzuwärmen, die in etwa der doppelten Dicke der zu schneidenden Schichtdicke entspricht. Dies kann auch kontinuierlich erfolgen.

Bezüglich der einzustellenden Temperatur ist es insbesondere bevorzugt, dass der Hartschaum vor dem Schneiden auf eine Temperatur oberhalb der Wärmeformbeständigkeitstemperatur des Hartschaummaterials erwärmt wird. Je nach Material kann diese sehr unterschiedlich sein, liegt jedoch bei geeigneten Hartschaummaterialien immer unterhalb der Schäumungstemperatur. Bei P(M)I-Hartschäumen werden die Schäumungstemperaturen primär durch die Wahl des Treibmittels eingestellt. Dabei kommt es nach abgeschlossener Schäumung bei einem erneuten Aufheizen in der Regel zu einem Nachschäumen, welches bei dem erfindungsgemäßen flächigen Trennen naturgemäß störend wäre.

In einer dritten Variante wird der Hartschaumstoff zuerst an den IR- oder Mikrowellen-Strahlungsquellen vorbeigeführt und darauf folgend in einem Abstand von maximal 2 m an das Messer transportiert. Weiterhin kann die Strahlungsquelle auch derart angeordnet sein, dass sich diese direkt über dem Messer befindet oder den Bereich direkt vor und über dem Messer abdeckt. Insbesondere die Erwärmung durch IR Strahler erlaubt eine Erwärmung direkt vor dem Messer.

In einer vierten Variante des erfindungsgemäßen Verfahrens erfolgt das Spalten der noch erwärmten Hartschäume direkt nach dem Schaumvorgang in einem Ofen oder in einer Heizpresse.

Bei der Ausführungsform der Wasserlagerung vor der Trennung wird der Hartschaumstoff für mindestens 30 min, bevorzugt mindestens eine Stunde und bevorzugt mindestens 24 Stunden in dem Wasserbad gelagert. Dabei hängt die Lagerungsdauer insbesondere von der Dicke des zu trennenden Hartschaums ab. Nach der Wasserlagerung wird der Hartschaum dann innerhalb von höchstens 30 min, bevorzugt innerhalb von höchstens 10 min mit dem Messer getrennt.

Auch bezüglich der Anordnung des Messers gibt es verschiedene Ausführungsformen. In einer bevorzugten Ausführungsform wird der Hartschaumblock senkrecht zur Schneidfläche des Messers bewegt, während das Messer sich dabei nur senkrecht zur Transportrichtung des Hartschaumblocks bewegt. Alternativ, jedoch weniger bevorzugt wird das Messer beim Schneiden entlang eines feststehenden Hartschaums geführt. Auch ist es möglich, dass das Messer und der Hartschaum eine entgegengesetzte Bewegungsrichtung aufweisen, wobei das Messer bei den beiden zuletzt genannten Varianten gleichsam zusätzlich zur Unterstützung des Schneidvorgangs senkrecht zum Hartschaum bewegt werden kann.

Bei der senkrechten Bewegung des Messers gibt es wiederum zwei Varianten. Zum einen kann dieses hin und her bewegt werden. Bevorzugt ist jedoch die Verwendung eines Bandmessers. Ein solches Bandmesser wird senkrecht zur Schnittrichtung umlaufend in eine Richtung bewegt und dabei in der Regel über mindestens zwei Umlenkrollen geführt und angetrieben. Bandmesseranlagen sind kommerziell erhältlich.

In einer besonderen Ausführungsform der Erfindung werden von dem Hartschaumstoff nach der Flexibilisierung in einer Bewegung durch mehrere hintereinander befindliche Messer mehrere Stücke, z.B. in Form von Folien oder dünnen Platten abgetrennt. Dabei kann es sich insbesondere um mehrere in reihe gestellte Bandmesser handeln. So können aus einem Block auf eine sehr effiziente Art und Weise mehrere Werkstücke in einem Arbeitsgang abgetrennt werden.

Große Vorteile der vorliegenden Erfindung sind, dass das Anfallen von Abfall in Form von Sägestaub beim Auftrennen von Hartschaumstoffen nahezu vermieden wird, und dass eine thermische Schädigung der Hartschaumstoffoberflächen ausgeschlossen wird. Somit kann Materialverlust begrenz werden und das Verfahren ist insgesamt wirtschaftlicher als Verfahren des Standes der Technik.

Speziell bei besonders harten Schäumen mit einer hohen Steifigkeit und Sprödigkeit, wie beispielsweise P(M)I-Hartschaum, kann das Problem, dass die Platten beim Schneiden brechen, insbesondere bedingt durch den keilförmigen Querschnitt der Klinge, durch das erfindungsgemäße Verfahren überraschend umgangen werden. Dies erfolgt insbesondere indem die Flexibilität der Schaumstoffe vor dem Schneiden erhöht wird.

Bezüglich des Spaltproduktes sind zwei verschiedene Möglichkeiten zu unterscheiden. Einerseits ist es erfindungsgemäß möglich, eine Folie, bestehend aus dem Hartschaumstoff, mit einer Dicke zwischen 0,05 und 1,0 mm zu erhalten. Solche Folien können je nach verwendetem Hartschaummaterial derart flexibel sein, dass sie zum Beispiel aufgerollt oder sogar gefaltet werden können. So ist es beispielsweise möglich, die abgetrennte Folie nach dem Trennvorgang, z.B. zum weiteren Transport, auf eine Rolle zu wickeln.

Alternativ können auch mittels des erfindungsgemäßen Verfahrens dünne Platten, bestehend aus dem Hartschaumstoff, mit einer Dicke zwischen mehr als 1,0 und maximal 30,0 mm erhalten werden. So ist es möglich, durch einen geeigneten Schneidvorgang mehrere solcher Platten aus einem Hartschaumblock zu gewinnen. Nach Stand der Technik musste jede dieser dünnen Platten getrennt aufgeschäumt werden.

Unabhängig davon, ob dünne Platten oder Folien abgetrennt werden, können diese in nachfolgenden Schritten weiter veredelt bzw. verarbeitet werden. So können diese zunächst nach der Trennung in den anderen beiden Dimensionen zugeschnitten werden. So erhält man kleinere, leichter zu transportierende bzw. zu lagernde Platten oder Folien.

Alternativ ist es auch möglich, durch eine entsprechende Aufwärtsbewegung des Messers, insbesondere zur Abtrennung von Folien, Stücke in Schneidrichtung abzutrennen. Damit können einzelne Stücke, deren Breite wiederum durch die Breite des eingesetzten Hartschaums definiert ist, in einem Arbeitsgang, ohne nachträgliche Trennung erhalten werden. Besonders geeignet ist diese Variante insbesondere für Folien oder sehr dünne Platten, da mit zunehmender Dicke auch eine entsprechend spitz ablaufende Schnittkante an dieser Trennungsstelle erhalten wird.

Alternativ oder zusätzlich dazu können die Folie oder die dünne Platte anschließend mit mindestens einer Deckschicht belegt werden. Bei diesen Deckschichten kann es sich beispielsweise um Composite-Materialien, Metall oder Holz handeln. So können zum Beispiel im Leichtbau eingesetzte Sandwich-Materialien realisiert werden. Bei den Deckschichten kann es sich aber auch einfach nur um eine wieder entfernbare Schutzfolie oder um eine Dekorschicht handeln.

Als Hartschäume, die sich erfindungsgemäß verarbeiten lassen, seien insbesondere PE-, PP-, PVC-, PU-, PMMA- und P(M)I-Schäume genannt. Das Material für den Schaumkern stellt dabei bevorzugt P(M)I, besonders bevorzugt PMI dar. Solche P(M)I-Schäume werden auch als Hartschäume bezeichnet und zeichnen sich durch eine besondere Festigkeit aus. Die P(M)I-Schäume werden normalerweise in einem zweistufigen Verfahren hergestellt: a) Herstellung eines Gusspolymerisats und b) Aufschäumen dieses Gusspolymerisats.
Zur Herstellung des Gusspolymerisats werden zunächst Monomergemische, welche (Meth)acrylsäure und (Meth)acrylnitril, vorzugsweise in einem Molverhältnis zwischen 2:3 und 3:2, als Hauptbestandteile enthalten, hergestellt. Zusätzlich können weitere Comonomere verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen. Geringe Mengen von vernetzenden Monomeren, wie z.B. Allylacrylat, können auch verwendet werden. Die Mengen sollten jedoch vorzugsweise höchstens 0,05 bis 2,0 Gew% betragen.

Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt. Zur Herstellung von geschäumten Platten erfolgt darauf gemäß Stand der Technik in einem zweiten Schritt dann bei entsprechender Temperatur das Aufschäumen des Gusspolymerisats. Die Herstellung solcher PMI-Schäume ist dem Fachmann grundsätzlich bekannt und kann beispielsweise in EP 1 444 293, EP 1 678 244 oder WO 2011/138060 nachgelesen werden. Als PMI-Schäume seien insbesondere ROHACELL®-Typen der Firma Evonik Industries AG genannt. Bezüglich Herstellung und Verarbeitung sind zu den PMI-Schäumen Acrylimid-Schäume als Analoga anzusehen. Aus toxikologischen Gründen sind diese jedoch gegenüber anderen Schaummaterialien deutlich weniger bevorzugt.

Die Dichte des Hartschaummaterials ist relativ frei wählbar. P(M)I Schäume können beispielsweise in einem Dichtebereich von 20 bis 320 kg/m³, bevorzugt von 25 bis 250 kg/m³ eingesetzt werden. Besonders bevorzugt wird ein PMI-Schaum mit einer Dichte zwischen 30 und 200 kg/m³ eingesetzt.

PE- bzw. PP-Schäume sind vor allem als Isolationsmaterial, in Transportbehältern und als Sandwichmaterial bekannt. PE- bzw. PP-Schäume können Füllstoffe enthalten und sind zumeist in einem Dichtebereich zwischen 20 bis 200 kg/m³ kommerziell verfügbar.

PMMA-Schäume zeichnen sich dagegen durch eine besonders gute Witterungsstabilität und eine hohe UV-Beständigkeit aus. Bis dato sind PMMA-Schäume jedoch technisch von eher untergeordneter Bedeutung.

Polyurethan (PU) als Schaummaterial ist dagegen hinlänglich bekannt. Die Härte der PU-Schäume wird in der Regel durch die Verwendeten Di- oder Polyole und Isocyanate, sowie insbesondere einen hohen Vernetzungsgrad eingestellt.

PVC-Schäume sind insbesondere sehr spröde und damit für das erfindungsgemäße Verfahren nur bedingt geeignet. Dennoch lassen auch diese sich überraschend erfindungsgemäß verarbeiten.

Grundsätzlich sind die erfindungsgemäßen geschnittenen Hartschäume sehr breit einsetzbar. Erfindungsgemäß hergestellte dünne Platten können insbesondere Anwendung in der Serienfertigung z.B. für Karosseriebau oder für Innenverkleidungen in der Automobilindustrie, Teile zur Inneneinrichtung im Schienenfahrzeugs- oder Schiffsbau, in der Luft- und Raumfahrtindustrie, im Maschinenbau, zur Herstellung von Sportgeräten, beim Möbelbau oder bei der Konstruktion von Windkraftanlagen finden.

Hartschaumfolien dagegen können beispielsweise als Membranen, insbesondere in Lautsprechern, mobilen Abspielgeräten oder Kopfhörern Einsatz finden. Auch ist es denkbar, diese zu dekorativen Zwecken einzusetzen, z.B. zur Oberflächenveredlung von Gegenständen.

### Ausführungsbeispiele

Die im Folgenden wiedergegeben Beispiele umfassen diverse PMI-Schaumstoffe. Dabei ist der erfinderische Effekt überraschend für die geschlossenen Poren dieses Schaums. Entsprechend lassen sich die Ergebnisse einfach auf andere Hartschäume, die wie der Fachmann weiß gleichsam durch ausschließlich geschlossene Poren gekennzeichnet sind übertragen.

Gespalten wurde auf einer Bandmesseranlage von Fecken und Kirfel mit einer Bandmessergeschwindigkeit von 120 m/sec und einer Tischvorschubgeschwindigkeit von 20 m/min. Die Anlage war ausgerüstet mit Vakuumtisch, Niederhaltewalzen und automatischer Dickenverstellung.

Gespalten wurden PMI-Hartschäume der Marken Rohacell IG-F, HERO und RIMA der Nominaldichten 71 und 110 kg/m³. Das Spaltformat war 950 x 500 mm.

### Beispiel 1: Spalten nach Wasserlagerung

Die zu spaltenden Platten wurden 30 h unter Wasser gelagert und dann bei Raumtemperatur gespalten. Die Spaltdicken waren 1 mm und 2 mm. Die Platten konnten ohne Bruch gespalten werden.

### Beispiel 2: Spalten nach Erhitzen im Ofen

Die zu spaltenden Schaumblöcke wurden in einem Umluftofen bei 160° bis 190°C jeweils 2 Stunden gelagert. Danach wurden sie gespalten. Der Zeitverzug zwischen Entnahme aus dem Ofen und dem Beginn des Spaltvorganges betrug ca. 10 sec. Die Spaltdicken wurden zwischen 2 und 15 mm eingestellt. Die Platten konnten ohne Bruch gespalten werden.

### Beispiel 3: Spalten nach Erhitzen in einer Heizpresse

Die Erwärmung in der Heizpresse geschah bei einer Heizplattentemperatur zwischen 160°C und 190°C für 2 h, wobei die Platten der Heizpresse Kontakt auf beiden Seiten des Schaumblockes hatten, der Plattendruck wurde auf maximal 0.2 bar eingestellt. Der Zeitverzug zwischen Entnahme aus der Heizpresse und dem Beginn des Spaltvorganges betrug ca. 10 sec. Die Spaltdicken wurden zwischen 2 und 15 mm eingestellt. Die Platten konnten ohne Bruch gespalten werden.

### Beispiel 4: Spalten direkt nach dem Schäumvorgang

Zum Spalten direkt nach dem Schäumvorgang, der bei 230°C durchgeführt wurde, wurde der frisch geschäumte Rohacell Schaumblock direkt gespalten. Der Zeitverzug zwischen Entnahme aus dem Schäumofen und dem Beginn des Spaltvorganges betrug ungefähr 20 sec, so dass der Schaumblock auf eine Temperatur zwischen 215 und 220 °C abgkühlte. Die Platten konnten ohne Bruch gespalten werden.

### Beispiel 5: Spalten durch Erhitzen mit IR Strahlung während des Spaltprozesses

Die Anlage wurde durch ein IR Strahlerfeld ergänzt. Die breite des Strahlerfeldes wurde so gewählt, dass es an beiden Seiten 20 cm breiter war als der zu schneidende Schaumblock. Die Länge des Strahlerfeldes betrug 100 cm. Das IR-Strahlerfeld war so positioniert, dass es sich vor dem Bandmesser befand. Die Platten wurden bei einer Spaltdicke von 10 mm mit einer Geschwindigkeit von 1 m/min gespalten. Die Leistung des Strahlerfeldes wurde so gewählt, dass sich die Platten ohne Einrisse oder Bruch spalten ließen.

## Patentansprüche

1. Verfahren zur flächigen Trennung von Hartschäumen zur Gewinnung von Folien oder dünnen Platten, **dadurch gekennzeichnet, dass** der Hartschaum erst flexibilisiert und anschließend mit einem Messer geschnitten wird, wobei zur Flexibilisierung der Hartschaum vor dem Schneiden in Wasser gelagert wird und/oder auf eine Temperatur erhitzt oder eingestellt wird, die minimal 15 °C und maximal 1 °C unterhalb der Schäumungstemperatur des Hartschaumstoffs liegt, und dass es sich bei dem hartschaum um einen PE-, PP-, PVC-, PMMA- oder P(M)I-Schaum handelt.

2. Verfahren gemäß Anspruch 1, **dadurch gekennzeichnet, dass** der Hartschaumstoff vor dem Schneiden durch Lagerung in einem Ofen oder durch Bestrahlung mit IR-Strahlen oder Mikrowellen flexibilisiert wird.

3. Verfahren gemäß Anspruch 2, **dadurch gekennzeichnet, dass** der Hartschaumstoff direkt nach der Entnahme aus einem Ofen oder einer Heizpresse mit dem Messer geschnitten wird, oder dass sich das Messer in dem Ofen befindet.

4. Verfahren gemäß Anspruch 2, **dadurch gekennzeichnet, dass** der Hartschaumstoff zuerst an den IR- oder Mikrowellen-Strahlungsquellen vorbei und darauf folgend in einem Abstand von maximal 2 m an das Messer transportiert wird, oder dass sich die Strahlenquelle direkt über dem Messer befindet.

5. Verfahren gemäß mindestens einem der Ansprüche 1 bis 4, **dadurch gekennzeichnet, dass** der Hartschaum vor dem Schneiden auf eine Temperatur oberhalb der Wärmeformbeständigkeitstemperatur des Hartschaummaterials erwärmt wird.

6. Verfahren gemäß Anspruch 1, **dadurch gekennzeichnet, dass** der Hartschaumstoff für mindestens 30 min in dem Wasserbad gelagert wird und danach innerhalb von höchstens 30 min mit dem Messer getrennt wird.

7. Verfahren gemäß mindestens einem der Ansprüche 1 bis 6, **dadurch gekennzeichnet, dass** der Hartschaumblock senkrecht zur Schneidfläche des Messers bewegt wird, und dass das Messer sich dabei nur senkrecht zur Transportrichtung des Hartschaumblocks bewegt.

8. Verfahren gemäß mindestens einem der Ansprüche 1 bis 7, **dadurch gekennzeichnet, dass** es sich bei dem Hartschaumstoff um einen P(M)I-Schaum mit einer Dichte zwischen 20 und 320 kg/m³ handelt.

9. Verfahren gemäß mindestens einem der Ansprüche 1 bis 8, **dadurch gekennzeichnet, dass** mittels des Verfahrens eine Folie, bestehend aus dem Hartschaumstoff, mit einer Dicke zwischen 0,05 und 1,0 mm erhalten wird.

10. Verfahren gemäß mindestens einem der Ansprüche 1 bis 8, **dadurch gekennzeichnet, dass** mittels des Verfahrens eine dünne Platte, bestehend aus dem Hartschaumstoff, mit einer Dicke zwischen mehr als 1,0 und maximal 30,0 mm erhalten wird.

11. Verfahren gemäß mindestens einem der Ansprüche 1 bis 10, **dadurch gekennzeichnet, dass** es sich bei dem Messer um ein Bandmesser, welches senkrecht zur Schnittrichtung umlaufend bewegt wird, handelt.

12. Verfahren gemäß einem der Ansprüche 9 oder 11, **dadurch gekennzeichnet, dass** die Folie oder die dünne Platte anschließend mit mindestens einer Deckschicht belegt wird.

13. Verfahren gemäß mindestens einem der Ansprüche 1 bis 12, **dadurch gekennzeichnet, dass** von dem Hartschaumstoff nach der Flexibilisierung in einer Bewegung durch mehrere hintereinander befindliche Messer mehrere Folien bzw. dünne Platten abgetrennt werden

14. Verfahren gemäß mindestens einem der Ansprüche 1 bis 13, **dadurch gekennzeichnet, dass** die abgetrennten Folien oder dünnen Platten nach der Trennung in den anderen beiden Dimensionen zugeschnitten werden.

15. Verfahren gemäß Anspruch 9, **dadurch gekennzeichnet, dass** die abgetrennte Folie anschließend auf eine Rolle gewickelt wird.

## Claims

1. Method for planar division of rigid foams to obtain films or thin sheets, **characterized in that** the rigid foam is first flexibilized and then cut with a knife, flexibilization of the rigid foam prior to cutting being accomplished by storing in water and/or heating or adjusting to a temperature of not less than 15°C and not more than 1°C below the foaming temperature of the rigid foam, and **in that** the rigid foam is a PE, PP, PVC, PMMA or P(M)I foam.

2. Method according to Claim 1, **characterized in that** the rigid foam is flexibilized prior to cutting by storing in an oven or by irradiating with IR rays or microwaves.

3. Method according to Claim 2, **characterized in that** the rigid foam is cut with the knife directly after removal from an oven or a heated press, or **in that** the knife is within the oven.

4. Method according to Claim 2, **characterized in that** the rigid foam is first moved past the IR or microwave radiation sources and subsequently transported to the knife with a maximum distance of 2 m, or **in that** the radiation source is directly above the knife.

5. Method according to at least one of Claims 1 to 4, **characterized in that** the rigid foam is heated prior to cutting to a temperature above the heat distortion resistance temperature of the rigid foam material.

6. Method according to Claim 1, **characterized in that** the rigid foam is stored in a water bath for at least 30 min and then divided with the knife within not more than 30 min.

7. Method according to at least one of Claims 1 to 6, **characterized in that** the rigid foam slab is moved at right angles to the cutting surface of the knife, and **in that** the knife moves only at right angles to the transport direction of the rigid foam slab.

8. Method according to at least one of Claims 1 to 7, **characterized in that** the rigid foam is a P(M)I foam having a density between 20 and 320 kg/m³.

9. Method according to at least one of Claims 1 to 8, **characterized in that**, by means of the method, a film consisting of the rigid foam having a thickness between 0.05 and 1.0 mm is obtained.

10. Method according to at least one of Claims 1 to 8, **characterized in that**, by means of the method, a thin sheet consisting of the rigid foam having a thickness between more than 1.0 and a maximum of 30.0 mm is obtained.

11. Method according to at least one of Claims 1 to 10, **characterized in that** the knife is a band knife which moves in a circuit at right angles to the cutting direction.

12. Method according to one of Claims 9 and 11, **characterized in that** the film or the thin sheet is subsequently covered with at least one outer layer.

13. Method according to at least one of Claims 1 to 12, **characterized in that** several films or thin sheets are divided off from the rigid foam after the flexibilization in one movement by means of several knives in succession.

14. Method according to at least one of Claims 1 to 13, **characterized in that** the films or thin sheets divided off, after being divided, are cut to size in the two other dimensions.

15. Method according to Claim 9, **characterized in that** the film divided off is subsequently wound onto a roll.

## Revendications

1. Procédé pour la séparation à plat de mousses dures pour l'obtention de feuilles ou de plaques minces, **caractérisé en ce que** la mousse dure est d'abord flexibilisée et ensuite coupée à l'aide d'un couteau, où, pour la flexibilisation, la mousse dure, avant la coupe, est entreposée dans de l'eau et/ou chauffée ou réglée à une température qui est située au minimum 15°C et au maximum 1°C sous la température de moussage de la mousse dure et **en ce que** la mousse dure est une mousse en PE, en PP, en PVC, en PMMA ou en P(M)I.

2. Procédé selon la revendication 1, **caractérisé en ce que** la mousse dure, avant la coupe, est flexibilisée par entreposage dans un four ou par irradiation par des rayons IR ou des micro-ondes.

3. Procédé selon la revendication 2, **caractérisé en ce que** la mousse dure est coupée directement après le prélèvement d'un four ou d'une presse à chaud à l'aide du couteau ou **en ce que** le couteau se trouve dans le four.

4. Procédé selon la revendication 2, **caractérisé en ce que** la mousse dure est d'abord transportée devant les sources de rayonnement IR ou de micro-ondes et ensuite, en une distance d'au maximum 2 m, au niveau du couteau ou **en ce que** la source de rayonnement se trouve directement au-dessus du couteau.

5. Procédé selon au moins l'une quelconque des revendications 1 à 4, **caractérisé en ce que** la mousse dure est chauffée, avant la coupe, à une température supérieure à la température de résistance au moulage thermique du matériau de mousse dure.

6. Procédé selon la revendication 1, **caractérisé en ce que** la mousse dure est entreposée pendant au moins 30 minutes dans le bain d'eau et ensuite séparée en au plus 30 minutes à l'aide du couteau.

7. Procédé selon au moins l'une quelconque des revendications 1 à 6, **caractérisé en ce que** le bloc de mousse dure est déplacé perpendiculairement à la surface de coupe du couteau et **en ce que** le couteau ne se déplace que perpendiculairement à la direction de transport du bloc de mousse dure.

8. Procédé selon au moins l'une quelconque des revendications 1 à 7, **caractérisé en ce qu'**il s'agit, pour la mousse dure, d'une mousse en P(M)I présentant une densité entre 20 et 320 kg/m³.

9. Procédé selon au moins l'une quelconque des revendications 1 à 8, **caractérisé en ce qu'**une feuille, constituée par la mousse dure, d'une épaisseur entre 0,05 et 1,0 mm est obtenue à l'aide du procédé.

10. Procédé selon au moins l'une quelconque des revendications 1 à 8, **caractérisé en ce qu'**une plaque mince, constituée par la mousse dure, d'une épaisseur entre plus de 1,0 et au maximum 30,0 mm est obtenue à l'aide du procédé.

11. Procédé selon au moins l'une quelconque des revendications 1 à 10, **caractérisé en ce que** le couteau est un couteau-ruban qui est déplacé en rotation perpendiculairement à la direction de coupe.

12. Procédé selon l'une quelconque des revendications 9 ou 11, **caractérisé en ce que** la feuille ou la plaque mince est ensuite revêtue d'une couche de recouvrement.

13. Procédé selon au moins l'une quelconque des revendications 1 à 12, **caractérisé en ce que** plusieurs feuilles ou plaques minces sont séparées de la mousse dure après la flexibilisation en un seul déplacement par plusieurs couteaux successifs.

14. Procédé selon au moins l'une quelconque des revendications 1 à 13, **caractérisé en ce que** les feuilles ou les plaques minces séparées sont découpées après la séparation dans les deux autres dimensions.

15. Procédé selon la revendication 9, **caractérisé en ce que** la feuille séparée est ensuite enroulée en un rouleau.
